Europäisches Patentamt

European Patent Office

Office européen des brevets

(19)

(11) Veröffentlichungsnummer: **0 458 247 A2**

# (12) EUROPÄISCHE PATENTANMELDUNG

(21) Anmeldenummer: **91108152.9**

(22) Anmeldetag: **21.05.91**

(51) Int. Cl.5: **G01N 19/04**

(30) Priorität: **23.05.90 DE 9005846 U**

(43) Veröffentlichungstag der Anmeldung:
**27.11.91 Patentblatt 91/48**

(84) Benannte Vertragsstaaten:
**CH DE FR GB IT LI**

(71) Anmelder: **DEGUSSA AG**
**Weissfrauenstrasse 9**
**W-6000 Frankfurt (Main)(DE)**

(72) Erfinder: **Barbehön, Jörg, Dr.**
**Erbacher Strasse 150**
**W-6100 Darmstadt(DE)**
Erfinder: **Greinemann, Franz**
**Danziger Strasse 7a**
**W-6454 Bruchköbel(DE)**

(54) **Vorrichtung zur Durchführung von Haftfestigkeitstests dünner Schichten.**

(57) Ein handliches und unkompliziertes Meßgerät zur Bestimmung der Haftfestigkeit dünner Schichten auf Unterlagen mittels eines Klebestreifens besteht aus einem Gerätetisch, auf dem die Probe befestigt ist, und einem Rahmen, an dem unter einem Winkel von 45° eine Traverse angebracht ist. An der Traverse befindet sich ein Druckzylinder, dessen Kolbenstange parallel zur Traverse beweglich ist. Die Kolbenstange trägt ein Zugkraftmeßgerät mit einem Aufnehmer, an dem der Klebestreifen der Meßprobe befestigt wird, Das Abziehen erfolgt hierbei stets unter einem 90° Winkel zur Meßprobe.

EP 0 458 247 A2

Die Neuerung betrifft eine Vorrichtung zur Durchführung von Haftfestigkeitstests an dünnen Schichten auf einer Unterlage mittels eines Klebestreifens aus flexiblen Materialien, bestehend aus einem mit Befestigungselementen für die Meßprobe versehenen Gerätetisch und einem an diesem befestigten, vertikal ausgerichteten Rahmen, an dem eine Traverse angebracht ist.

In vielen Bereichen der Oberflächentechnik findet ein Klebestreifenabzugstest zur Prüfung der Haftung von aufgebrachten Schichten nach ASTM Norm D3359 Anwendung. Dabei wird ein Klebestreifen auf die zu prüfende Oberfläche aufgerieben und anschließend wieder abgezogen. Dieser Haftungstest gilt als bestanden, wenn die Schicht dieser Beanspruchung ohne Ablösung widersteht.

Um mit Hilfe des Klebestreifenabzugstests zu einer quantitativen Aussage über die Haftung zu gelangen, kann ein quadratisches Gitter in die Schicht eingeritzt werden, so daß man durch den prozentualen Anteil der verbleibenden Gitterquadrate nach dem Abzug ein Maß für die Qualität der Haftung erhält (DIN 53151 sowie ASTM Norm D 3359). Diese Prüfung kann auch vor und nach bestimmten Temperatur- und/oder Klimawechselbeanspruchungen durchgeführt werden, um die Langzeitstabilität der Substrat/Schicht-Bindungen zu testen.

Es ist allgemein anerkannt, daß die hierzu existierenden Prüfvorschriften für eine objektive, reproduzierbare Anwendung dieses Testverfahrens völlig unzureichend sind, da der Grad der Ablösung abhängig davon ist, welcher Klebebandtyp verwendet wird, mit welcher Kraft das Klebeband auf die Meßprobe aufgerieben wird, mit welcher Geschwindigkeit der Abzug des Klebestreifens von der Meßprobe erfolgt und welche Kraft vom Klebestreifen auf die Schicht übertragen wird.

Diese elementaren Prüfparameter sind allein schon deshalb nicht oder nur unzureichend spezifiziert, weil die Prüfvorschriften davon ausgehen, daß der Klebestreifentest manuell von Hand ausgeführt wird, womit eine Registrierung der Prüfparameter nicht möglich ist. Es sind Vorrichtungen im Gebrauch, die aus einem Gerätetisch bestehen, der mit Befestigungselementen für die Meßproben versehen ist und an dem ein vertikaler Rahmen mit einer beweglichen Traverse befestigt ist. Die Traverse wird mechanisch an dem Rahmen bewegt und zieht dabei den Klebestreifen von der Heßprobe ab. Diese Vorrichtungen sind jedoch sehr unhandlich und kompliziert aufgebaut, so daß sie beispielsweise in einfachen Testlabors kaum zum Einsatz kommen.

Es war daher Aufgabe der vorliegenden Neuerung, eine Vorrichtung zur Durchführung von Haftfestigkeitstests von dünnen Schichten auf einer Unterlage mittels eines Klebestreifens aus flexiblen Materialien, bestehend aus einem mit Befestigungselementen für die Meßprobe versehenen Gerätetisch und einem an diesem befestigten vertikal ausgerichteten Rahmen, an dem eine Traverse angebracht ist, zu entwickeln, die handlich und unkompliziert aufgebaut ist, die die Abzugskraft des Klebestreifens registriert und über eine einstellbare Abzugsgeschwindigkeit des Klebestreifens regulierbar ist.

Diese Aufgabe wird neuerungsgemäß dadurch gelöst, daß die Traverse unter einem Winkel von 45° zur Ebene des Gerätetisches an dem Rahmen befestigt ist, daß an der Traverse ein pneumatisch oder hydraulisch betriebener Druckzylinder angebracht ist, dessen Kolben und Kolbenstange sich parallel zur Achse der Traverse bewegen, daß am Ende der Kolbenstange ein Zugkraftmeßgerät befestigt ist, das mit einem Aufnehmer versehen ist, an dem das freie Ende des auf der Meßprobe aufgeklebten Klebestreifens angebracht ist, wobei die Achsen von Zugkraftmeßgerät und Aufnehmer senkrecht zur Oberfläche der Meßprobe ausgerichtet sind.

Mit Hilfe dieser Vorrichtung ist es möglich, die Abzugskraft eines Klebestreifens auf einer dünnen Schicht zuverlässig zu messen und zu registrieren. Die 45°-Stellung der Traverse gewährleistet dabei einen konstanten Abzugswinkel von 90°, wenn der Druckzylinder seinen Kolben einzieht und damit der aufgeklebte Streifen abgezogen wird. Dabei wird nicht die Abzugsgeschwindigkeit direkt gemessen, sondern die Zeit, in der der Kolben in den Zylinder eingezogen wird. Dies geschieht beispielsweise über 2 Mikroschalter, die von einem Ausleger des Zylinderkolbens selbst betätigt werden. Die Abzugsgeschwindigkeit, als ein zur Zugzeit korrespondierender Wert, kann aus einer Tabelle entnommen werden. Über ein Reguliergventil kann die Abzugsgeschwindigkeit beispielsweise im Bereich zwischen 2,0 und 25,0 cm/s, bezogen auf die Ablösegeschwindigkeit des Klebestreifens beim Abzieh-Test präzise eingestellt werden. Die vom Klebestreifen übertragene Kraft wird am Zugkraftmeßgerät digital angezeigt, der maximale Wert wird dabei gespeichert.

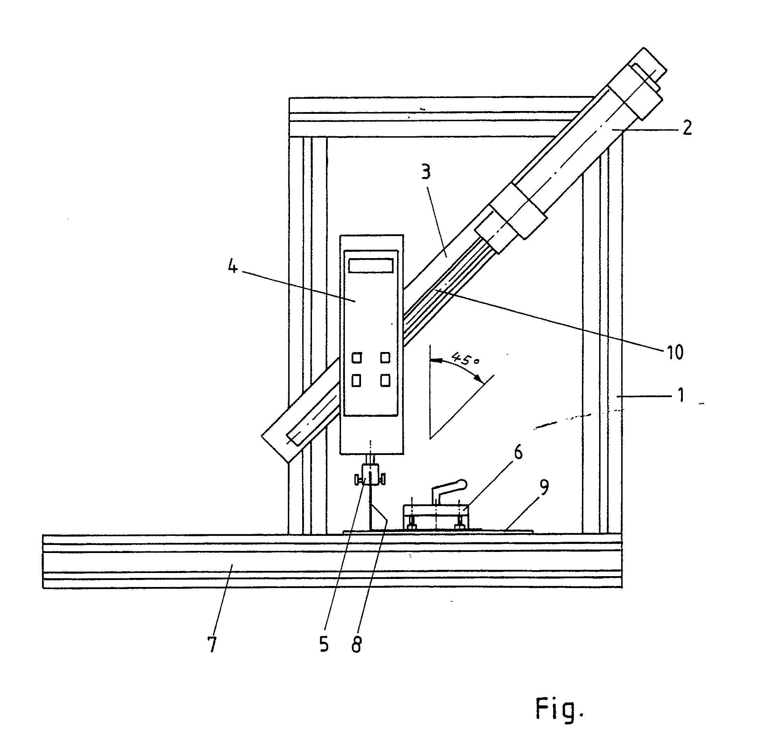

Die Abbildung zeigt schematisch einen Längsschnitt durch eine beispielhafte Ausführungsform der neuerungsgemäßen Vorrichtung. Auf dem Gerätetisch (7) ist ein Rahmen (1) aufmontiert, an dem unter einem Winkel von 45° eine Traverse (3) lösbar befestigt ist. An der Traverse (3) ist ein pneumatischer oder hydraulischer Druckzylinder (2) angebracht, mit einer Kolbenstange (10), die ein Zugkraftmeßgerät (4) trägt. Dieses Zugkraftmeßgerät (4) ist mit einem Aufnehmer (5) versehen, in dem das freie Ende des Klebebandes (8) eingespannt ist. Die Meßprobe (9) ist mit Befestigungselementen (6) auf dem Gerätetisch (7) befestigt.

**Patentansprüche**

1. Vorrichtung zur Durchführung von Haftfestigkeitstests an dünnen Schichten auf einer Unterlage mittels eines Klebestreifens aus flexiblen Materialien, bestehend aus einem mit Befestigungselementen für die Meßprobe versehenen Gerätetisch und einem an diesem befestigten, vertikal ausgerichteten Rahmen, an dem eine Traverse angebracht ist, dadurch gekennzeichnet, daß die Traverse (3) unter einem Winkel von 45° zur Ebene des Gerätetisches (7) an dem Rahmen (1) befestigt ist, daß an der Traverse (3) ein pneumatisch oder hydraulich betriebener Druckzylinder (2) angebracht ist, dessen Kolben und Kolbenstange (10) sich parallel zur Achse der Traverse (3) bewegen, daß am Ende der Kolbenstange (10) ein Zugkraftmeßgerät (4) befestigt ist, das mit einem Aufnehmer (5) versehen ist, an dem das freie Ende der auf der Meßprobe (9) aufgeklebten Klebestreifens (8) angebracht ist, wobei die Achsen von Zugkraftmeßgerät (4) und Aufnehmer (5) senkrecht zur Oberfläche der Meßprobe (9) ausgerichtet sind.

Fig.